# EUROPÄISCHE PATENTSCHRIFT

(11) **EP 0 391 370 B1**
(45) Veröffentlichungstag und Bekanntmachung des Hinweises auf die Patenterteilung: **03.07.1996**
(21) Anmeldenummer: 90106398.2
(22) Anmeldetag: 04.04.1990
(51) Int. Cl.: C08G 59/04, C08G 59/06, C08G 59/68

(54) **Neue Epoxidharze**
Epoxy resins
Résines époxydes

(30) Priorität: 07.04.1989 CH 1318/89
(43) Veröffentlichungstag der Anmeldung: 10.10.1990
(73) Patentinhaber: CIBA-GEIGY AG, CH-4002 Basel (CH)
(72) Erfinder: Hofer, Arnold, Dr., CH-4132 Muttenz (CH); Wegmann, Alex, Dr., CH-4123 Allschwil (CH)
(74) Vertreter: Zumstein, Fritz, Dr.

(56) Entgegenhaltungen:
- EP-A- 0 051 483
- EP-A- 0 154 724
- EP-A- 0 154 724
- EP-A- 0 314 619
- GB-A- 1 096 957

## Beschreibung

Die vorliegende Erfindung betrifft neue vorverlängerte Epoxidharze, die sich insbesondere als Komponenten von Lackformulierungen eignen, und die daraus durch Härtung erhältlichen Produkte.

Unter Vorverlängerung von Epoxidharzen wird im allgemeinen eine Umsetzung eines Epoxidharzes mit einer Dihydroxyverbindung unter Kettenverlängerung verstanden.

In der US-A-4,698,400 wird die Vorverlängerung von Diepoxiden mit aliphatischen Diolen beschrieben. In einer zweiten Stufe wird das erhaltene Epoxidharz mit Carbonsäuren enthaltend eine zusätzliche primäre Hydroxylgruppe umgesetzt. Die praktisch epoxidfreien, hydroxylgruppenhaltigen Produkte werden anschliessend als Starterkomponenten für die Polymerisation von Lactonen eingesetzt, wobei Pfropfcopolymere entstehen. Diese Verbindungen lassen sich als Komponenten von Beschichtungsmitteln verwenden.

Aus der US-A-4,684,701 ist ein Verfahren zur Herstellung von vorverlängerten Epoxidharzen mit einem geringen Gehalt an aliphatisch gebundenem Halogen bekannt. Das Verfahren ist gekennzeichnet durch die einstufige Umsetzung eines Epoxidharzes mit einem Polyphenol und einem aliphatischen Alkohol in einem inerten Lösungsmittel und in Gegenwart von Alkalimetallhydroxid als Katalysator. Infolge der einstufigen Reaktionsführung kann das Verhältnis zwischen beiden Alkoholkomponenten im vorverlängerten Produkt nur bedingt gesteuert werden, da die reaktivere aromatische Hydroxykomponente bevorzugt eingebaut wird. Es hat sich gezeigt, dass die Menge an aliphatischer Alkoholkomponente wichtige lacktechnische Parameter des Produktes beeinflusst, wie z.B. dessen Viskosität, Flexibilität, Haftfestigkeit sowie die mechanische und chemische Beständigkeit des gehärteten Produktes. Mit dem vorbekannten Verfahren lassen sich diese Eigenschaften nur bedingt einstellen.

Struktur und Eigenschaften der Vorverlängerungsprodukte werden im allgemeinen von der Natur des verwendeten Katalysators beeinflusst. Hier spielt vor allem die Selektivität des Katalysators eine Rolle, welche ein Mass für die Erzeugung linearer Polyhydroxyether ist. Der Katalysator beeinflusst in der Regel das Verhältnis der beiden miteinander in Konkurrenz stehenden Reaktionen zwischen den Epoxidgruppen des vorzuverlängernden Harzes und den Hydroxylgruppen des Polyalkohols bzw. zwischen den Epoxidgruppen des vorzuverlängernden Harzes und den sekundären Hydroxylgruppen des Epoxidharzes. Die letztere Reaktion führt im allgemeinen zu verzweigten oder teilvernetzten Epoxidharzen. Produkte, bei denen diese letztere Reaktion teilweise abläuft, weisen in der Regel hohe Viskositäten auf und sind daher als Lackrohstoffe weniger erwünscht.

Es wurde jetzt gefunden, dass die oben geschilderten Nachteile vermieden werden können, wenn aromatische Epoxidharze in einer zweistufigen Reaktion in Gegenwart eines ausgewählten Katalysators mit geringen Mengen aliphatischer Dihydroxyverbindungen und anschliessend mit bestimmten aromatischen Dihydroxyverbindungen vorverlängert werden. Die erhaltenen Produkte zeichnen sich durch eine im Vergleich zu vorverlängerten Epoxidharzen ohne aliphatische Dihydroxykomponente stark verringerte Viskosität aus. Ferner wurde gefunden, dass sich die Viskosität dieser Harze bei der Heisslagerung im allgemeinen nur unwesentlich vergrössert, dass also praktisch kein Aufbau der vorverlängerten Epoxidharze stattfindet: Ausserdem zeichnen sich die aus den erfindungsgemässen Harzen erhältlichen gehärteten Produkte durch eine überraschend gute Chemikalienbeständigkeit und Abriebfestigkeit, sowie eine erhöhte Flexibilität und Haftfestigkeit aus.

Die Erfindung betrifft Epoxidharze, die erhältlich sind durch eine Vorverlängerungsreaktion umfassend die Schritte:
a) Umsetzung eines flüssigen oder halbfesten aromatischen Epoxidharzes enthaltend durchschnittlich mehr als eine Epoxidgruppe pro Molekül mit etwa 2 bis 30 Aequivalent %, bezogen auf die Menge an Epoxidäquivalenten des zur Vorverlängerung eingesetzten Epoxidharzes, eines aliphatischen Diols mit zwei primären Hydroxylgruppen in Gegenwart einer katalytischen Menge einer cyclischen quaternären Ammoniumverbindung, und
b) Umsetzung des in Stufe a) erhaltenen Produktes mit etwa 30 bis 95 Aequivalent %, bezogen auf die Menge an Epoxidäquivalenten des zur Vorverlängerung eingesetzten Epoxidharzes eines Phenols oder Bisphenols der Formel I 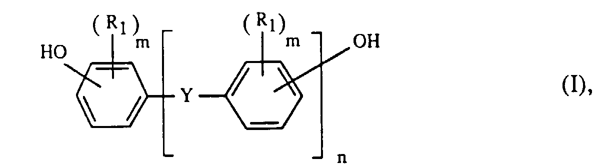 worin der Index m 0, 1 oder 2 bedeutet, der Index n 0 oder insbesondere 1 ist, R₁ C₁-C₈-Alkyl, Chlor oder insbesondere Brom ist und Y eine direkte C-C-Bindung ist oder ein Rest ist, der ausgewählt wird aus der Gruppe bestehend aus -CH₂-, -CHCH₃-, -C(CH₃)₂-, -O-, -S- und -SO₂-.

Bei den vorzugsweise verwendeten aromatischen Polyglycidylverbindungen kann es sich um Ether oder Ester handeln. Ferner können die Glycidylgruppen auch an Stickstoffatome geknüpft sein. Ganz besonders bevorzugt setzt man Diglycidylverbindungen ein.

Als Phenole, welche den Ethern zugrunde liegen, sind beispielsweise die folgenden zu nennen:
einkernige Diphenole, wie Resorcin oder Hydrochinon, Naphthaline mit zwei Hydroxylgruppen, wie 1,4-Dihydroxynaphthalin, Dihydroxybiphenyle und andere zweikernige aromatische Verbindungen, die eine Methylen-, Isopropyliden-, O-, S- oder SO₂-Brücke aufweisen und zwei Hydroxylgruppen den aromatischen Kernen gebunden enthalten, wie zum Beispiel Bis-(hydroxyphenyl)-methan (Bisphenol F) und insbesondere 2,2-Bis-(4-hydroxyphenyl)-propan (Bisphenol A) oder deren chlorierte oder insbesondere bromierte Derivate, wie z.B. Tetrabrombisphenol A.

Als Basis für die Glycidylester dienen beispielsweise aromatische Dicarbonsäuren, wie Isophthalsäure oder Terephthalsäure.

Als Epoxidverbindungen, worin die Glycidylgruppen an Stickstoffatome geknüpft sind, kommen vor allem N-Glycidylverbindungen von aromatischen Aminen in Frage. Ein Beispiel dafür ist N,N-Diglycidylanilin.

Dabei handelt es sich um an sich bekannte und mehrheitlich käufliche Produkte.

Der Begriff "flüssiges oder halbfestes aromatisches Epoxidharz enthaltend durchschnittlich mehr als eine Epoxidgruppe pro Molekül" ist dem Fachmann auf dem Gebiet der Epoxidharze an sich bekannt. Als Beispiele von bevorzugten Epoxidharzen seien die Diglycidylether auf Basis von Bisphenol A genannt. Bei diesen Harzen weisen flüssige Harze Epoxidzahlen von etwa fünf bis sechs Aequivalenten/kg auf und halbfeste Harze weisen Epoxidzahlen von etwa drei bis fünf Aequivalenten/kg auf.

Als aliphatisches Diol, das in der erfindungsgemässen Vorverlängerungsreaktion eingesetzt werden kann, eignen sich im allgemeinen alle aliphatischen Verbindungen, die primäre Hydroxylgruppen aufweisen. Insbesondere bevorzugt man aliphatische Diole mit zwei endständigen primären Hydroxylgruppen.

Beispiele für aliphatische Diole sind Alkylenglykole mit gerader oder verzweigter Alkylenkette, wie Ethylenglykol, 1,3-Propandiol, 1,4-Butandiol, 1,5-Pentandiol, Neopentylglykol (2,2-Dimethylpropandiol), 1,6-Hexandiol, 1,8-Octandiol, 1,10-Decandiol, 1,12-Dodecandiol, oder Polyalkylenglykole, wie Di- oder Triethylenglykol oder höhere Poly-(oxyethylen)-glykole, oder Di- oder Tripropylenglykol oder höhere Poly-(oxypropylen)-glykole, oder Di- oder Tributylenglykol oder höhere Poly-(oxybutylen)-glykole.

Als Verbindungen der Formel I eignen sich einkernige Bisphenole, wie Resorcin oder Hydrochinon oder insbesondere zweikernige Bisphenole, worin die Hydroxylgruppen sich bevorzugt jeweils in para-Position zur Brücke Y befinden.

Bevorzugt verwendet man Bisphenole der Formel I, worin n 1 ist und Y -CH₂- und insbesondere -C(CH₃)₂- bedeutet.

Beispiele für bevorzugte Bisphenole der Formel I sind Resorcin, Hydrochinon, 4,4'-Dihydroxybiphenyl, Bis-(4-hydroxyphenyl)-methan, Bis-(4-hydroxyphenyl)-ether, Bis(4-hydroxyphenyl)-sulfid, Bis-(4-hydroxyphenyl)-sulfon und insbesondere 2,2-Bis(4-hydroxyphenyl)-propan oder deren chlorierte oder bromierte Derivate, wie z.B. Tetrabrombisphenol A.

Es können auch Gemische der erwähnten aliphatischen Diole, sowie Gemische von Bisphenolen der Formel I eingesetzt werden.

Als cyclische quaternäre Ammoniumverbindung zur Katalyse der Vorverlängerungsreaktion setzt man vorzugsweise quaternäre Pyrrolidiniumsalze, quaternäre Morpholiniumsalze oder insbesondere quaternäre Piperidiniumsalze ein.

Dabei handelt es sich insbesondere um die Verbindungen der Formeln II, III oder IV 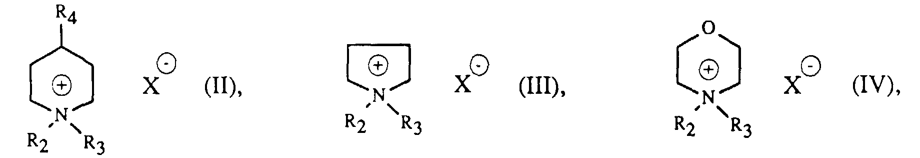 worin R₂ C₁-C₈-Alkyl und R₃ C₁-C₈-Alkyl, C₂-C₈-Hydroxyalkyl, C₃-C₈-Alkoxy-hydroxyalkyl, C₃-C₈-Alkenyl, C₃-C₈-Alkoxycarbonylalkyl, C₃-C-₈-Alkylcarbonylalkyl, C₇-C₉-Phenylalkyl oder C₇-C₉-Phenylhydroxyalkyl bedeutet, R₄ Wasserstoff oder Hydroxyl ist, und X Halogen oder Acetat bedeutet.

Als Piperidiniumsalze eignen sich vorzugsweise Verbindungen, die der oben definierten Formel II entsprechen, worin R₂ C₁-C₈-Alkyl ist, R₃ C₁-C₈-Alkyl, C₂-C₈-Hydroxyalkyl oder Benzyl sind, R₄ Wasserstoff bedeutet und X Halogen oder Acetat ist.

Als Pyrrolidiniumsalze eignen sich vorzugsweise Verbindungen, die der oben definierten Formel III entsprechen, worin R₂ C₁-C₈-Alkyl ist, R₃ C₁-C₈-Alkyl, C₂-C₈-Hydroxyalkyl oder Benzyl bedeutet und X Halogen oder Acetat ist.

Als Morpholiniumsalze eignen sich vorzugsweise Verbindungen, die der oben definierten Formel IV entsprechen, worin R₂ C₁-C₈-Alkyl ist, R₃ C₁-C₈-Alkyl, C₂-C₈-Hydroxyalkyl oder Benzyl bedeutet und X Brom oder Iod ist.

Als C₁-C₈-Alkyl, bevorzugt C₁-C₄-Alkyl, kommen verzweigte oder vorzugsweise geradkettige Reste in Frage. Beispiele dafür sind Methyl, Ethyl, n-Propyl, n-Butyl, n-Hexyl oder n-Octyl.

Als C₂-C₈-Hydroxyalkyl, bevorzugt C₂-C₃-Hydroxyalkyl, kommen Gruppen mit verzweigten oder vorzugsweise geradkettigen Alkylenresten in Frage. Beispiele dafür sind 2-Hydroxyethyl, 2-Hydroxypropyl oder 2-Hydroxybutyl.

Mit C₃-C₈-Alkoxyhydroxyalkyl werden Reste bezeichnet, die sowohl eine Etherfunktion, als auch eine Hydroxylgruppe enthalten, beispielsweise (2-Hydroxy-3-butoxy)-propyl.

Bedeutet R₃ C₃-C₈-Alkenyl, so handelt es sich dabei um Reste, deren Doppelbindung nicht in Konjugation zum Stickstoffatom steht. Beispiele dafür sind Allyl oder Methallyl.

Als C₃-C₈-Alkoxycarbonylalkyl kommen Gruppen mit verzweigten oder vorzugsweise geradkettigen Alkyl- und Alkylenresten in Frage. Beispiele dafür sind 2-Methoxycarbonylethyl oder 2-Ethoxycarbonylethyl.

Als C₃-C₈-Alkylcarbonylalkyl kommen Gruppen mit verzweigten oder vorzugsweise geradkettigen Alkyl- und Alkylenresten in Frage. Beispiele dafür sind 2-Methylcarbonylethyl oder 2-Ethylcarbonylethyl.

Beispiele für C₇-C₉-Phenylalkylreste sind Benzyl oder Phenylethyl.

Ein Beispiel für einen C₇-C₉-Phenylhydroxyalkylrest ist (2-Hydroxy-2-phenyl)-ethyl.

X ist als Halogen insbesondere I, Br oder Cl, bevorzugt I oder Br und vor allem I.

Die Verbindungen der Formeln II, III und IV sind an sich bekannt und können auf herkömmliche Weise hergestellt werden, beispielsweise durch Umsetzung eines Piperidins der Formel IIa oder eines Pyrrolidins der Formel IIIa oder eines Morpholins der Formel IVa mit einer Verbindung R₃-X 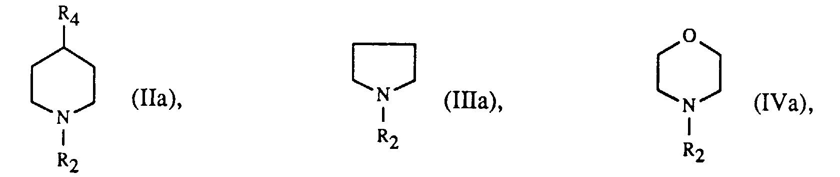 worin R₂, R₃, R₄ und X die weiter oben definierte Bedeutung besitzen. Bezüglich weiterer Einzelheiten betreffend die Herstellung der Verbindungen der Formeln II, III und IV wird auf die Beispiele verwiesen.

Die Gesamtmenge der zur Vorverlängerung eingesetzten Diolkomponenten hängt davon ab, was für ein Produkt gewünscht wird. Je grosser sie ist, desto höher wird das Molekulargewicht des Endproduktes im allgemeinen sein. Dabei wird auch der Erweichungspunkt ansteigen und die Epoxidzahl des gewonnenen Harzes wird abnehmen.

Die erfindungsgemässen Produkte besitzen im allgemeinen eine Epoxidzahl zwischen 0,1 und 2,5 Aequivalenten/kg. Die Epoxidzahl des Endproduktes kann in an sich bekannter Weise über die vorzulegende Gesamtmenge an Diolkomponente bei der Vorverlängerung gesteuert werden.

Davon werden etwa 95 bis 70 Mol%, bezogen auf die Gesamtmenge an Diolkomponente, aus Bisphenol der Formel I bestehen, während etwas bis 30 Mol% der Diolkomponente aus einem aliphatischen Diol besteht. Diese Mengenverhältnisse bzw. Gesamtmengen werden erreicht, wenn die Diolkomponenten in den weiter oben definierten Aequivalenzprozenten, bezogen auf die Epoxidäquivalente, eingesetzt werden.

Der Anteil der aliphatischen Diolkomponente beträgt vorzugsweise 5 bis 20 Mol%, bezogen auf die Gesamtmenge an Diolkomponente.

Die Vorverlängerungsreaktion wird zweistufig geführt.

Im ersten Schritt wird das Harz mit der gewünschten Menge der im Vergleich zum Bisphenol reaktionsträgeren aliphatischen Dihydroxyverbindung praktisch quantitativ umgesetzt. Im zweiten Schritt wird dieses Zwischenprodukt, vorzugsweise ohne dieses zu isolieren, mit der reaktiveren Bisphenolkomponente umgesetzt, bis die Epoxidzahl des gewünschten Harztyps erreicht ist.

Die Umsetzung kann in Anwesenheit oder vorzugsweise in Abwesenheit eines unter den Reaktionsbedingungen inerten Lösungsmittels erfolgen. Beispiele für inerte Lösungsmittel sind aliphatische Ketone, wie Methylethylketon, aromatische Kohlenwasserstoffe, wie Toluol oder Xylol, halogenierte aromatische Kohlenwasserstoffe, wie Dichlorbenzol, oder aliphatische Ether, wie der Dimethylether von Diethylenglykol.

Die erfindungsgemäss zu verwendenden cyclischen quaternären Ammoniumsalze werden in katalytisch wirksamen Mengen eingesetzt, beispielsweise in einer Menge von etwa 10 bis 5'000, vorzugsweise von 500 bis 3'000 und insbesondere von 600 bis 2'400 ppm, bezogen auf das Gewicht des Basisharzes.

Die Reaktion wird im allgemeinen bei 140 bis 220°C, vorzugsweise bei 160 bis 200°C, und insbesondere bei etwa 180°C geführt.

Die Reaktion kann an der Luft oder unter Schutzgasatmosphäre, beispielsweise unter Stickstoff oder Argon, geführt werden. Der Druck beträgt im allgemeinen 10 bis 3'000 mbar, vorzugsweise 10 bis 600 mbar.

Bei Bedarf kann in der zweiten Stufe zusätzliches cyclisches quaternäres Ammoniumsalz als Katalysator zugegeben werden.

Das Bisphenol der Formel I kann in einer oder in mehreren Portionen zugegeben werden.

Das Endprodukt zeichnet sich durch eine überraschend niedrige Viskosität aus. Die Viskositäten betragen üblicherweise 100 bis 5'000 mPas, vorzugsweise 100 bis 2'500 mPas (gemessen gemäss DIN 53015 als 40 %ige Lösung in Butylcarbitol bei 25°C), je nach Molmasse der hergestellten Harzes.

Bevorzugte Harze dieser Erfindung sind erhältlich durch Vorverlängerung von flüssigen Diglycidylethern auf Basis von Bisphenol A mit 2 bis 30 Aequivalent %, bezogen auf die Menge an eingesetzten Epoxidäquivalenten, an α,ω-Alkylenglykolen mit zwei bis sechs Kohlenstoffatomen oder an Polyethylenglykol, insbesondere an Diethylenglykol, in Gegenwart von 600 bis 2'400 ppm, bezogen auf die Menge des flüssigen Diglycidylethers, eines quaternären Pyrrolidinium-, Morpholinium- oder insbesondere eines Piperidiniumsalzes gefolgt von der Umsetzung mit 30 bis 95 Aequivalent %, bezogen auf die Menge an eingesetzten Epoxidäquivalenten, an Bisphenol A, Bisphenol F, Tetrabrombisphenol A oder einem Gemisch dieser Phenole.

Bei dieser bevorzugten Umsetzung wird bei einer Temperatur von 160 bis 200°C, insbesondere von etwa 180°C, und bei einem Druck von 10 bis 600 mbar gearbeitet

Ganz besonders bevorzugte Harze dieser Erfindung sind erhältlich durch Vorverlängerung bei etwa 180°C von flüssigem Diglycidylether auf Basis von Bisphenol A mit 3 bis 19 Aequivalent %, bezogen auf die Menge an eingesetzten Epoxidäquivalenten, an 1,4-Butandiol oder an Diethylenglykol, in Gegenwart von etwa 600 bis 1'200 ppm, bezogen auf die Menge des flüssigen Diglycidylethers, an N-Ethyl-N-methylpiperidinium-iodid gefolgt von der Umsetzung mit 45 bis 61 Aeqivalent %, bezogen auf die Menge an eingesetzten Epoxidäquivalenten, von Bisphenol A. Das dabei erhaltene Produkt besitzt eine Epoxidzahl von etwa 1,20 bis 1,40 Aequivalenten/kg.

Weitere ganz besonders bevorzugte Harze dieser Erfindung sind erhältlich durch Vorverlängerung bei etwa 180°C von flüssigem Diglycidylether auf Basis von Bisphenol A mit 4 bis 25 Aequivalent %, bezogen auf die Menge an eingesetzten Epoxidäquivalenten, an 1,4-Butandiol oder an Diethylenglykol, in Gegenwart von etwa 1'200 bis 2'400 ppm, bezogen auf die Menge des flüssigen Diglycidylethers, an N-Ethyl-N-methylpiperidiniumiodid gefolgt von der Umsetzung mit 57 bis 78 Aeqivalent %, bezogen auf die Menge an eingesetzten Epoxidäquivalenten, von Bisphenol A. Das dabei erhaltene Produkt besitzt eine Epoxidzahl von etwa 0,45 bis 0,60 Aequivalenten/kg.

Weitere ganz besonders bevorzugte Harze dieser Erfindung sind erhältlich durch Vorverlängerung bei etwa 180°C von flüssigem Diglycidylether auf Basis von Bisphenol A mit 4 bis 26 Aequivalent %, bezogen auf die Menge an eingesetzten Epoxidäquivalenten, an 1,4-Butandiol oder an Diethylenglykol, in Gegenwart von etwa 1'200 bis 1'500 ppm, bezogen auf die Menge des flüssigen Diglycidylethers, an N-Ethyl-N-methylpiperidiniumiodid gefolgt von der Umsetzung mit 62 bis 84 Aeqivalent %, bezogen auf die Menge an eingesetzten Epoxidäquivalenten, von Bisphenol A. Das dabei erhaltene Produkt besitzt eine Epoxidzahl von etwa 0,34 bis 0,43 Aequivalenten/kg.

Die auf diese Weise erhaltenen vorverlängerten Epoxidharze zeichnen sich durch hohe Stabilität der Epoxidzahl und der Viskosität nach thermischer Belastung aus. Ausserdem besitzen die Harze eine für die Weiterverarbeitung günstige, niedrige Viskosität. Durch die konstante Aktivität und die beachtliche Selektivität der eingesetzten Vorverlängerungskatalysatoren werden ausserordentlich lineare Produkte erhalten. Im allgemeinen kann auf den Einsatz eines monofunktionellen Kettenabbrechers, z.B. eines monofunktionellen Phenols, verzichtet werden. Falls erwünscht, kann jedoch auch ein solcher Kettenabbrecher in der Reaktion eingesetzt werden.

Die erfindungsgemässen Produkte zeichnen sich ferner durch ein gutes Farbverhalten aus, besonders in Kombination mit Phenolhärtern.

Die erfindungsgemässen Epoxidharze können durch Reaktion mit an sich üblichen Härtungsmitteln, wie Säureanhydriden, Polyaminen oder mehrwertigen Phenolen in vernetzte Produkte übergeführt werden. Es lassen sich kalthärtende und heisshärtende Härtungsmittel verwenden. Die gehärteten Endprodukte zeichnen sich überraschenderweise durch eine hohe Chemikalienbeständigkeit und eine hohe Abriebfestigkeit, sowie durch eine verbesserte Flexibilität und Haftfestigkeit aus.

Die Erfindung betrifft daher auch die gehärteten Produkte, die erhältlich sind durch Umsetzung der vorverlängerten Epoxidharze dieser Erfindung mit einem an sich üblichen Härtungsmittel.

Die erfindungsgemässen vorverlängerten Epoxidharze können insbesondere für den Oberflächenschutz, zur Herstellung von Giesslingen oder von Prepregs und Laminaten eingesetzt werden.

Besonders erwähnenswert ist der Einsatz der vorverlängerten Epoxidharze dieser Erfindung als Festharzkomponente zur Herstellung von High-Solids Lacken, als Komponente von Pulverlacken, oder als Komponente von Dosen- oder Tubenlacken. Die Erfindung betrifft auch die Verwendung der Epoxidharze für die oben erwähnten Zwecke.

Die folgenden Beispiele erläutern die Erfindung.

### I. Herstellung des Katalysators

### I.1. Herstellung von N-Methyl-N-ethyl-piperidinium-iodid

In einer Schliffbime von 1000 ml Inhalt werden folgende Substanzen in derselben Reihenfolge vermischt:
- 40,7 ml Ethyliodid (0,5 Mol),
- 180 ml Methylethylketon (MEK),
- 62,0 ml N-Methylpiperidin (0,5 Mol).

Die Schliffbime wird in einem Rotationsverdampfer für ca. 4 Stunden auf 65°C erwärmt und dann das ausgefällte Produkt abgenutscht, kurz gewaschen und getrocknet. Die Ausbeute beträgt 119 g (=̂ 93 %). Der Schmelzpunkt beträgt 304°C.

### II. Herstellung der vorverlängerten Epoxidharze

### II.1. Allgemeine Synthesevorschrift

4,55 Epoxidäquivalente eines flüssigen Epoxidharzes werden mit 3 - 18 Aequ. %, bezogen auf die Aequivalente des eingesetzten Epoxidharzes, an aliphatischer Dihydroxyverbindung und mit 600 - 2400 ppm Katalysator (5 %ige Lösung in Butanol), bezogen auf die Menge an Epoxidharz, unter Rühren auf 180°C erhitzt, bis die Epoxidzahl einen quantitativen Umsatz des Epoxidharzes mit der aliphatischen Dihydroxyverbindung anzeigt. Dann gibt man 49 - 78 Aequ. %, bezogen auf die Aequivalente des eingesetzten Epoxidharzes, an aromatischer Dihydroxyverbindung in einer oder mehreren Portionen zu. Dazwischen wartet man, bis die Temperatur jeweils wieder 180°C erreicht hat. Ist nach Zugabe der letzten Portion an aromatischer Dihydroxyverbindung die Temperatur wieder auf 180°C gestiegen, legt man ein leichtes Vakuum an (ca. 500 mbar) und rührt weiter, bis das Epoxidintervall des gewünschten Harztyps erreicht ist. Anschliessend lädt man das Harz aus und lässt erkalten.

### II.2. Beispiele 1-16:

Herstellung von vorverlängerten Epoxidharzen ausgehend von flüssigem Diglycidylether auf Basis von Bisphenol A (Epoxidzahl: ca. 5,4 Äqu./kg), Diethylenglykol (DEG) oder 1,4-Butandiol (BUD) und Bisphenol A; Katalysator: N-Ethyl-N-methyl-piperidiniumiodid.

Die Vorgaben und Resultate der Reaktionen sind in den Tabellen 1-3 aufgeführt. Die Mengen an DEG, BUD und Bisphenol A sowie die Gesamtmenge der Hydroxyverbindungen sind in Aequ. %, bezogen auf die eingesetzte Menge Epoxidharz, angegeben.

### II.3. Beispiele 17-22:

Herstellung von vorverlängerten Epoxidharzen, ausgehend von flüssigen Diglycidylethern auf Basis von Bisphenol A (Epoxidzahl ca. 5,4 Aequ/kg), 1,4-Butandiol, 1,6-Hexandiol, Triethylenglykol und 2-Buten-1,4-diol, cis, mit Bisphenol A oder einem Gemisch von Bisphenol A und Bisphenol S. Katalysatoren:
N-Ethyl-N-methylpiperidinium-iodid,
N,N-Dimethylmorpholinium-chlorid,
N,N-Diethylpyrrolidinium-iodid.

Die Vorgaben und Resultate der Reaktionen sind in Tabelle 4 aufgeführt. Die Mengen an aliphatischem Diol, bzw. die Mengen von Bisphenol A und S und die Gesamtmengen der Hydroxylverbindungen sind in Aequ.%, bezogen auf die eingesetzte Menge Epoxidharz, angegeben.

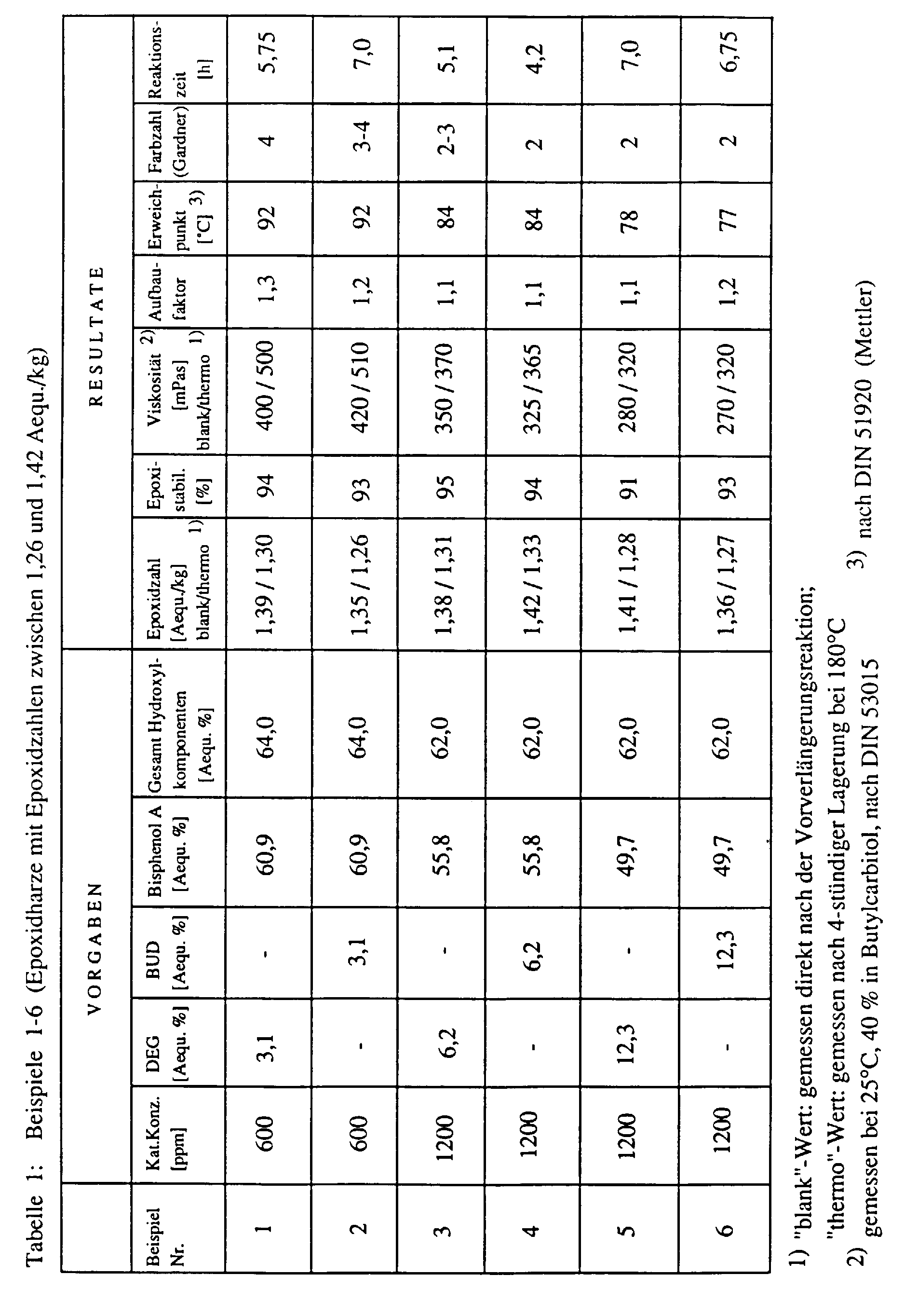

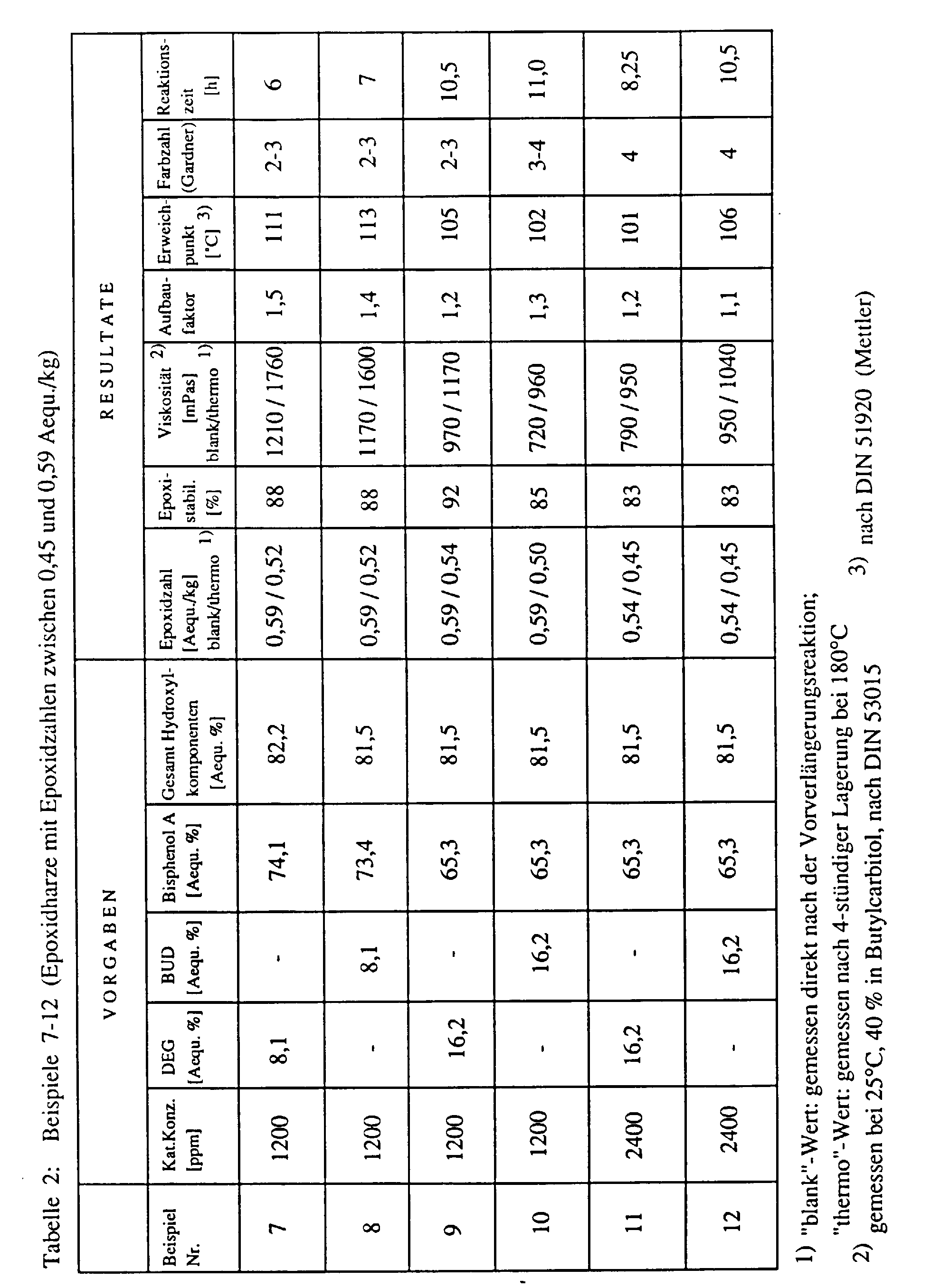

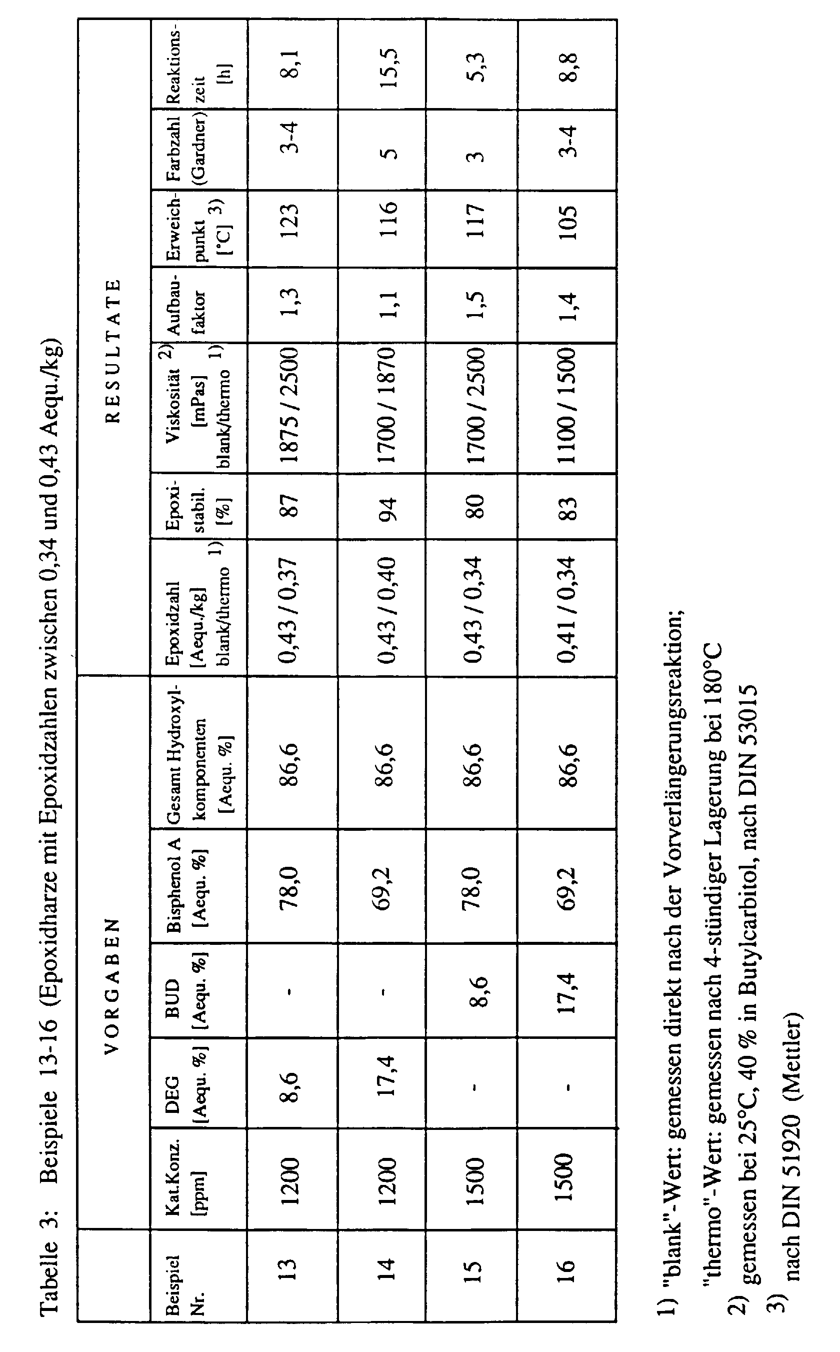

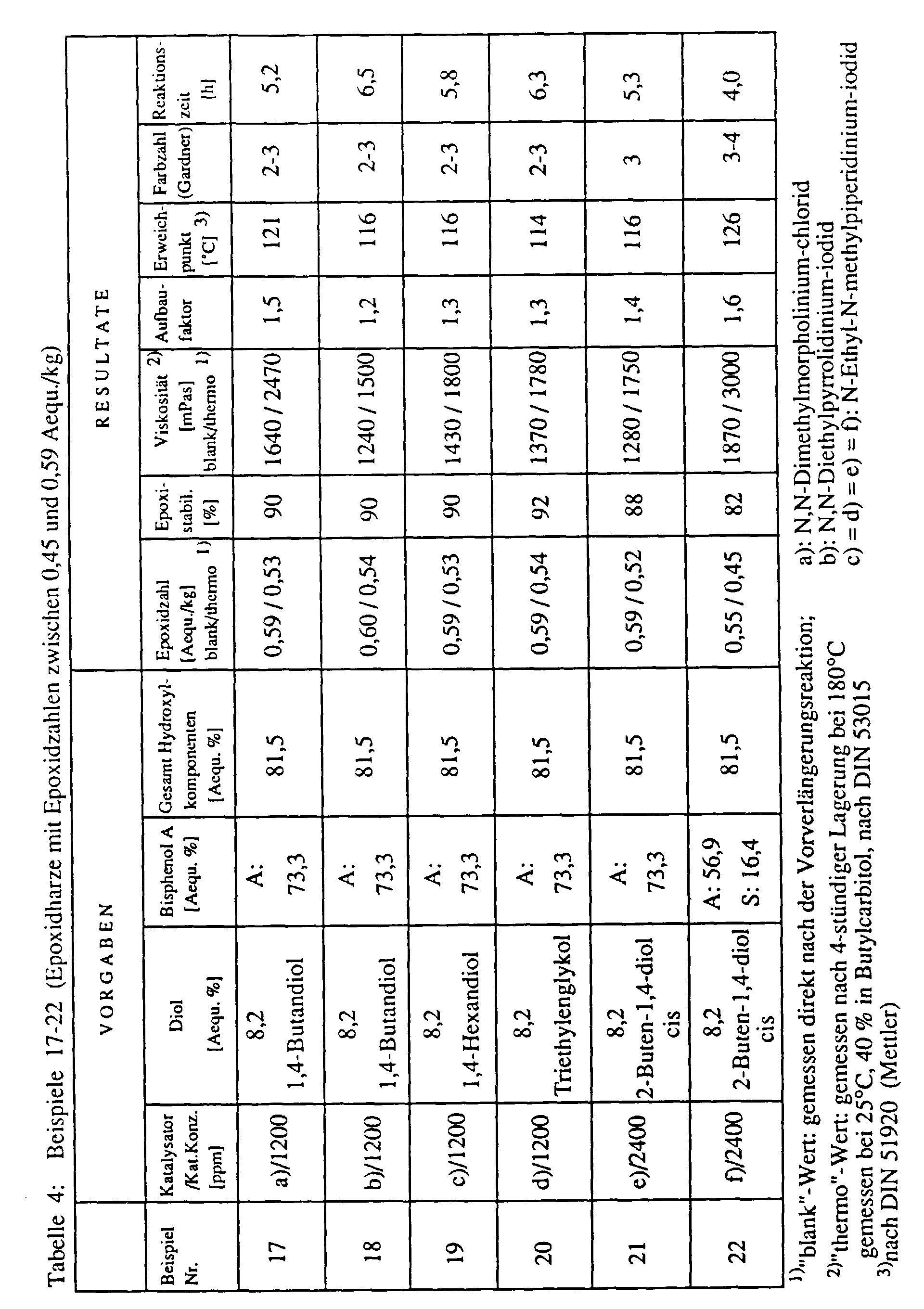

### III. Prüfung der lacktechnischen Eigenschaften

### III.1. Beispiele 1-6

Formulierung: Es werden 50 Gewichtsteile Harz in 50 Gewichtsteilen 1 -Methoxy-2-propylacetat heiss gelöst, 9,8 Gewichtsteile eines Anhydridhärters (3,2-3,8 Aequ./kg) in 14,7 Gewichtsteilen Cyclohexanon und 0,27 Gewichtsteile eines Verlaufsmittels (Siliconöl L050 10 % in Toluol) hinzugegeben. Anschliessend wird mit 1-Methoxy-2-propylacetat eine Auslaufviskosität von ca. 70 Sekunden eingestellt (DIN 4 mm Becher). Der Lack wird mit einem Rakelauftragsgerät auf Metallplatten (Aluminium bzw. Weissblech) appliziert und dann während 10 Minuten bei 200°C eingebrannt. Die Schichtdicke für die Dosenherstellung beträgt 6 µm. Die Resultate sind in Tabelle 5 zusammengefasst.

### III.2. Beispiele 7-12

Es wird wie unter III.1 verfahren, jedoch werden 4 Gewichtsteile eines Anhydridhärters (3,2-3,8 Aequ./kg) in 6 Gewichtsteilen Cyclohexanon verwendet. Die Schichtdicke beträgt 20-25 µm, bei der Dosen-/Näpfchenherstellung 6 µm. Die Resultate sind in Tabelle 6 aufgeführt

### III.3. Beispiele 13-16

Es wird wie unter III.1 verfahren, jedoch werden 2,7-3,1 Gewichtsteile eines Anhydridhärters (3,2-3,8 Aequ./kg) in 4,1-4,6 Gewichtsteilen Cyclohexanon und 50 Gewichtsteile Harz in 70 Gewichtsteilen 1-Methoxy-2-propylacetat verwendet. Die Schichtdicke beträgt 20-25 µm, bei der Dosen-Näpfchenherstellung 6 µm. Die Resultate sind in Tabelle 7 zusammengefasst.

### III.4. Beispiele 17-22

Es wird wie unter III.2 verfahren. Die Schichtdicke beträgt 20-25 µm, bei der Dosen-/Näpfchenherstellung 6 µm. Die Resultate sind in Tabelle 8 zusammengefasst.

**Tabelle 5:**

| Beispiele 1-6 Dosenherstellung | | | | | |
|---|---|---|---|---|---|
| Beispiel Nr. | Alu | WB | Beispiel Nr. | Alu | WB |
| 1 | 3 | 3 | 2 | 3 | 3 |
| 3 | 3 | 2-3 | 4 | 3 | 3 |
| 5 | 3 | 2 | 6 | 3 | 2 |
| Alu: Aluminium WB: Weissblech Noten nach DIN 53230 | | | | | |

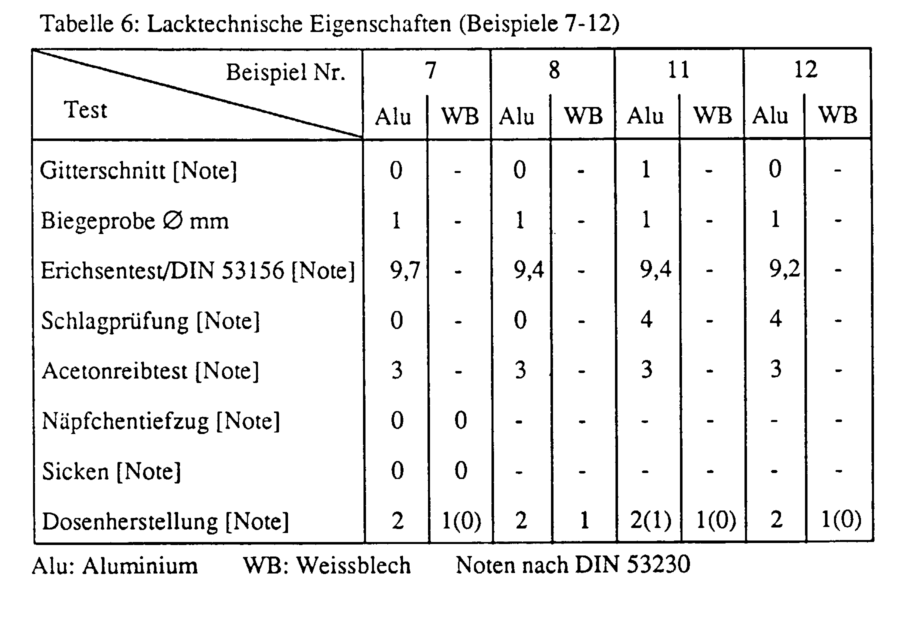

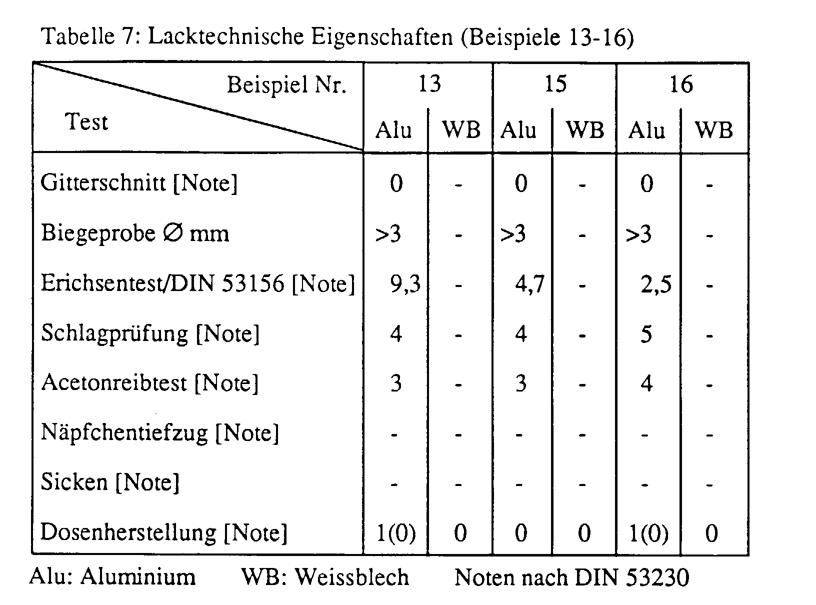

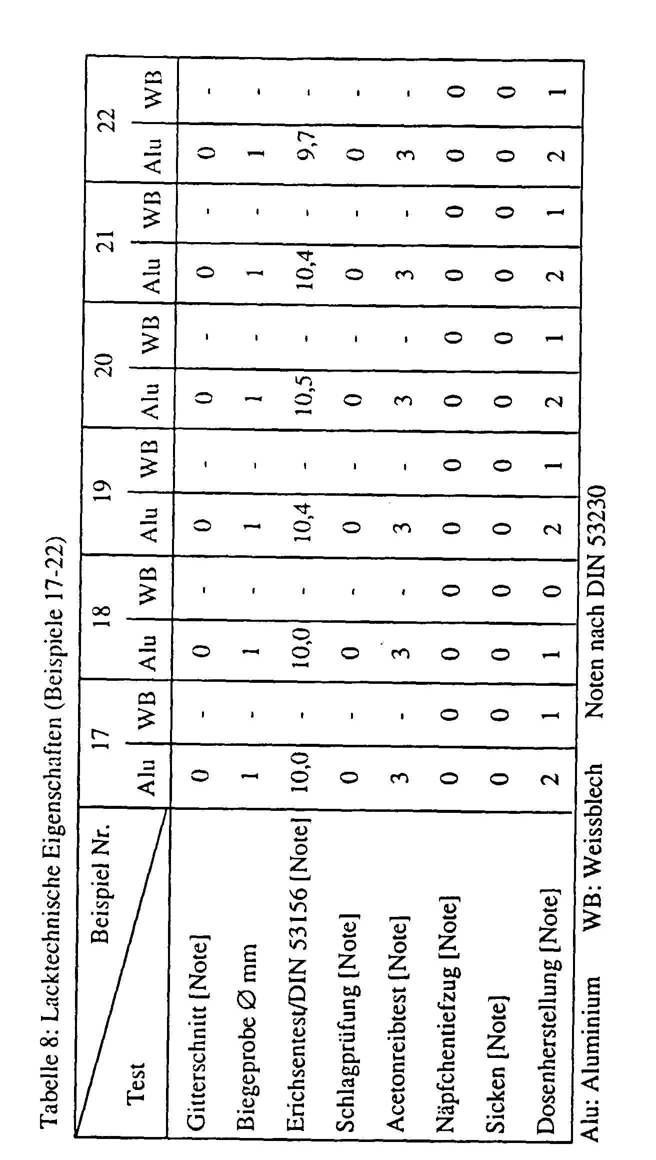

## Patentansprüche (Patentansprüche für folgende(n) Vertragsstaat(en): BE, CH, DE, FR, GB, IT, LI, NL)

1. Epoxidharze, die erhältlich sind durch eine Vorverlängerungsreaktion umfassend die Schritte:
a) Umsetzung eines flüssigen oder halbfesten aromatischen Epoxidharzes enthaltend durchschnittlich mehr als eine Epoxidgruppe pro Molekül mit etwa 2 bis 30 Aequivalent %, bezogen auf die Menge an Epoxidäquivalenten des zur Vorverlängerung eingesetzten Epoxidharzes, eines aliphatischen Diols mit zwei primären Hydroxylgruppen in Gegenwart einer katalytischen Menge einer cyclischen quaternären Ammoniumverbindung, und
b) Umsetzung des in Stufe a) erhaltenen Produktes mit etwa 30 bis 95 Aequivalent %, bezogen auf die Menge an Epoxidäquivalenten des zur Vorverlängerung eingesetzten Epoxidharzes, eines Phenols oder Bisphenols der Formel I 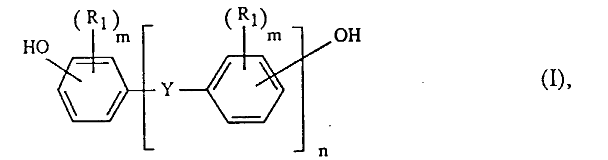 worin der Index m 0, 1 oder 2 bedeutet, der Index n 0 oder insbesondere 1 ist, R₁ C₁-C₈-Alkyl, Chlor oder insbesondere Brom ist und Y eine direkte C-C-Bindung ist oder ein Rest ist, der ausgewählt wird aus der Gruppe bestehend aus -CH₂-, -CHCH₃-, -C(CH₃)₂-, -O-, -S- und -SO₂-.

2. Vorverlängerte Epoxidharze gemäss Anspruch 1, dadurch gekennzeichnet, dass das flüssige oder halbfeste aromatische Epoxidharze enthaltend durchschnittlich mehr als eine Epoxidgruppe pro Molekül ein Diglycidylether auf Basis von Bisphenol A ist, der eine Epoxidzahl von etwa drei bis sechs Aequivalenten/kg aufweist.

3. Vorverlängerte Epoxidharze gemäss Anspruch 1, dadurch gekennzeichnet, dass das Phenol oder Bisphenol der Formel I ausgewählt wird aus der Gruppe bestehend aus Resorcin, Hydrochinon, 4,4'-Dihydroxybiphenyl, Bis-(4-hydroxyphenyl)-methan, Bis-(4-hydroxyphenyl)ether, Bis-(4-hydroxyphenyl)-sulfid, Bis-(4-hydroxyphenyl)-sulfon und insbesondere 2,2-Bis-(4-hydroxyphenyl)-propan oder deren chlorierten oder bromierten Derivaten, insbesondere Tetrabrombisphenol A.

4. Vorverlängerte Epoxidharze gemäss Anspruch 1, dadurch gekennzeichnet, dass als cyclische quaternäre Ammoniumverbindung zur Katalyse der Vorverlängerungsreaktion quaternäre Pyrrolidiniumsalze, quaternäre Morpholiniumsalze oder insbesondere quaternäre Piperidiniumsalze eingesetzt werden.

5. Vorverlängerte Epoxidharze gemäss Anspruch 4, dadurch gekennzeichnet, dass als cyclische quaternäre Ammoniumverbindung zur Katalyse der Vorverlängerungsreaktion Verbindungen der Formeln II, III oder IV eingesetzt werden 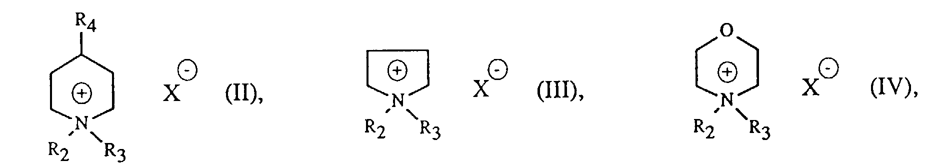 worin R₂ C₁-C₈-Alkyl und R₃ C₁-C₈-Alkyl, C₂-C₈-Hydroxyalkyl, C₃-C₈-Alkoxy-hydroxyalkyl, C₃-C₈-Alkenyl, C₃-C₈-Alkoxycarbonylalky, C₃-C₈-Alkylcarbonylalkyl, C₇-C₉-Phenylalkyl oder C₇-C₉-Phenylhydroxyalkyl bedeutet, R₄ Wasserstoff oder Hydroxyl ist, und X Halogen oder Acetat bedeutet.

6. Vorverlängerte Epoxidharze gemäss Anspruch 1, dadurch gekennzeichnet, dass diese erhältlich sind durch Vorverlängerung bei einer Temperatur von 160 bis 200°C und bei einem Druck von 10 bis 600 mbar von flüssigen Diglycidylethern auf Basis von Bisphenol A mit mit 2 bis 30 Aequivalent %, bezogen auf die Menge an eingesetzten Epoxidäquivalenten, an α,ω-Alkylenglykolen mit zwei bis sechs Kohlenstoffatomen oder an Polyethylenglykolen, insbesondere an Diethylenglykol, in Gegenwart von 600 bis 2'400 ppm, bezogen auf die Menge des flüssigen Diglycidylethers eines quaternären Pyrrolidinium-, Morpholinium- oder insbesondere eines Piperidiniumsalzes gefolgt von der Umsetzung mit 30 bis 95 Aequivalent %, bezogen auf die Menge an eingesetzten Epoxidäquivalenten, an Bisphenol A, Bisphenol F, Tetrabrombisphenol A oder einem Gemisch dieser Phenole.

7. Vorverlängerte Epoxidharze gemäss Anspruch 1, dadurch gekennzeichnet, dass diese erhältlich sind durch Vorverlängerung bei etwa 180°C von flüssigem Diglycidylether auf Basis von Bisphenol A mit 3 bis 19 Aequivalent %, bezogen auf die Menge an eingesetzten Epoxidäquivalenten, an 1,4-Butandiol oder an Diethylenglykol, in Gegenwart von etwa 600 bis 1'200 ppm, bezogen auf die Menge des flüssigen Diglycidylethers, an N-Ethyl-N-methylpiperidiniumiodid gefolgt von der Umsetzung mit 45 bis 61 Aequivalent %, bezogen auf die Menge an eingesetzten Epoxidäquivalenten, von Bisphenol A.

8. Vorverlängerte Epoxidharze gemäss Anspruch 1, dadurch gekennzeichnet, dass diese erhältlich sind durch Vorverlängerung bei etwa 180°C von flüssigem Diglycidylether auf Basis von Bisphenol A mit 4 bis 25 Aequivalent %, bezogen auf die Menge an eingesetzten Epoxidäquivalenten, an 1,4-Butandiol oder an Diethylenglykol, in Gegenwart von etwa 1'200 bis 2'400 ppm, bezogen auf die Menge des flüssigen Diglycidylethers, an N-Ethyl-N-methylpiperidiniumiodid gefolgt von der Umsetzung mit 57 bis 78 Aeqivalent %, bezogen auf die Menge an eingesetzten Epoxidäquivalenten, von Bisphenol A.

9. Vorverlängerte Epoxidharze gemäss Anspruch 1, dadurch gekennzeichnet, dass diese erhältlich sind durch Vorverlängerung bei etwa 180°C von flüssigem Diglycidylether auf Basis von Bisphenol A mit 4 bis 26 Aequivalent %, bezogen auf die Menge an eingesetzten Epoxidäquivalenten, an 1,4-Butandiol oder an Diethylenglykol, in Gegenwart von etwa 1'200 bis 1'500 ppm, bezogen auf die Menge des flüssigen Diglycidylethers, an N-Ethyl-N-methylpiperidiniumiodid gefolgt von der Umsetzung mit 62 bis 84 Aeqivalent %, bezogen auf die Menge an eingesetzten Epoxidäquivalenten, von Bisphenol A.

10. Verfahren zur Herstellung gehärteter Produkte unter Verwendung der vorverlängerten Epoxidharze gemäss Anspruch 1.

## Patentansprüche (Patentansprüche für folgende(n) Vertragsstaat(en): ES)

1. Verfahren zur Herstellung von Epoxidharzen, durch eine Vorverlängerungsreaktion umfassend die Schritte:
a) Umsetzung eines flüssigen oder halbfesten aromatischen Epoxidharzes enthaltend durchschnittlich mehr als eine Epoxidgruppe pro Molekül mit etwa 2 bis 30 Aequivalent %, bezogen auf die Menge an Epoxidäquivalenten des zur Vorverlängerung eingesetzten Epoxidharzes, eines aliphatischen Diols mit zwei primären Hydroxylgruppen in Gegenwart einer katalytischen Menge einer cyclischen quaternären Ammoniumverbindung, und
b) Umsetzung des in Stufe a) erhaltenen Produktes mit etwa 30 bis 95 Aequivalent %, bezogen auf-die Menge an Epoxidäquivalenten des zur Vorverlängerung eingesetzten Epoxidharzes, eines Phenols oder Bisphenols der Formel I 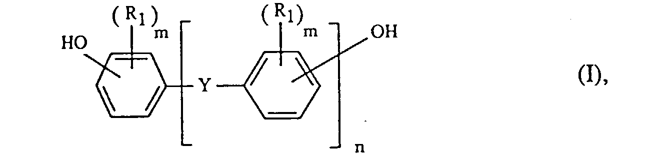 worin der Index m 0, 1 oder 2 bedeutet, der Index n 0 oder insbesondere 1 ist, R₁ C₁-C₈-Alkyl, Chlor oder insbesondere Brom ist und Y eine direkte C-C-Bindung ist oder ein Rest ist, der ausgewählt wird aus der Gruppe bestehend aus -CH₂-, -CHCH₃-, -C(CH₃)₂-, -O-, -S- und -SO₂-.

2. Verfahren gemäss Anspruch 1, dadurch gekennzeichnet, dass das flüssige oder halbfeste aromatische Epoxidharze enthaltend durchschnittlich mehr als eine Epoxidgruppe pro Molekül ein Diglycidylether auf Basis von Bisphenol A ist, der eine Epoxidzahl von etwa drei bis sechs Aequivalenten/kg aufweist

3. Verfähren gemäss Anspruch 1, dadurch gekennzeichnet, dass das Phenol oder Bisphenol der Formel I ausgewählt wird aus der Gruppe bestehend aus Resorcin, Hydrochinon, 4,4'-Dihydroxybiphenyl, Bis-(4-hydroxyphenyl)-methan, Bis-(4-hydroxyphenyl)-ether, Bis(4-hydroxyphenyl)-sulfid, Bis-(4-hydroxyphenyl)-sulfon und insbesondere 2,2-Bis(4-hydroxyphenyl)-propan oder deren chlorierten oder bromierten Derivaten, insbesondere Tetrabrombisphenol A.

4. Verfahren gemäss Anspruch 1, dadurch gekennzeichnet, dass als cyclische quaternäre Ammoniumverbindung zur Katalyse der Vorverlängerungsreaktion quaternäre Pyrrolidiniumsalze, quaternäre Morpholiniumsalze oder insbesondere quaternäre Piperidiniumsalze eingesetzt werden.

5. Verfahren gemäss Anspruch 4, dadurch gekennzeichnet, dass als cyclische quaternäre Ammoniumverbindung zur Katalyse der Vorverlängerungsreaktion Verbindungen der Formeln II, III oder IV eingesetzt werden 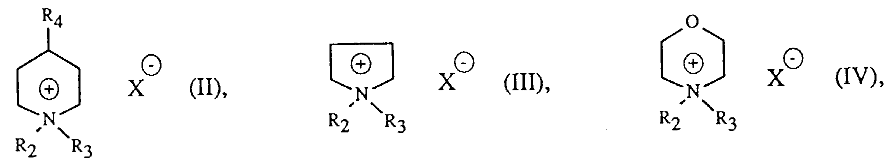 worin R₂ C₁-C₈-Alkyl und R₃ C₁-C₈-Alkyl, C₂-C₈-Hydroxyalkyl, C₃-C₈-Alkoxy-hydroxyalkyl, C₃-C₈-Alkenyl, C₃-C₈-Alkoxycarbonylalkyl, C₃-C₈-Alkylcarbonylalkyl, C₇-C₉-Phenylalkyl oder C₇-C₉-Phenylhydroxyalkyl bedeutet, R₄ Wasserstoff oder Hydroxyl ist, und X Halogen oder Acetat bedeutet.

6. Verfahren gemäss Anspruch 1, dadurch gekennzeichnet, dass diese erhältlich sind durch Vorverlängerung bei einer Temperatur von 160 bis 200°C und bei einem Druck von 10 bis 600 mbar von flüssigen Diglycidylethern auf Basis von Bisphenol A mit 2 bis 30 Aequivalent %, bezogen auf die Menge an eingesetzten Epoxidäquivalenten, an α,ω-Alkylenglykolen mit zwei bis sechs Kohlenstoffatomen oder an Polyethylenglykolen, insbesondere an Diethylenglykol, in Gegenwart von 600 bis 2'400 ppm, bezogen auf die Menge des flüssigen Diglycidylethers eines quaternären Pyrrolidinium-, Morpholinium- oder insbesondere eines Piperidiniumsalzes gefolgt von der Umsetzung mit 30 bis 95 Aequivalent %, bezogen auf die Menge an eingesetzten Epoxidäquivalenten, an Bisphenol A, Bisphenol F, Tetrabrombisphenol A oder einem Gemisch dieser Phenole.

7. Verfahren gemäss Anspruch 1, dadurch gekennzeichnet, dass diese erhältlich sind durch Vorverlängerung bei etwa 180°C von flüssigem Diglycidylether auf Basis von Bisphenol A mit 3 bis 19 Aequivalent %, bezogen auf die Menge an eingesetzten Epoxidäquivalenten, an 1,4-Butandiol oder an Diethylenglykol, in Gegenwart von etwa 600 bis 1'200 ppm, bezogen auf die Menge des flüssigen Diglycidylethers, an N-Ethyl-N-methylpiperidiniumiodid gefolgt von der Umsetzung mit 45 bis 61 Aequivalent %, bezogen auf die Menge an eingesetzten Epoxidäquivalenten, von Bisphenol A.

8. Verfahren gemäss Anspruch 1, dadurch gekennzeichnet, dass diese erhältlich sind durch Vorverlängerung bei etwa 180°C von flüssigem Diglycidylether auf Basis von Bisphenol A mit 4 bis 25 Aequivalent %, bezogen auf die Menge an eingesetzten Epoxidäquivalenten, an 1,4-Butandiol oder an Diethylenglykol, in Gegenwart von etwa 1'200 bis 2'400 ppm, bezogen auf die Menge des flüssigen Diglycidylethers, an N-Ethyl-N-methylpiperidiniumiodid gefolgt von der Umsetzung mit 57 bis 78 Aeqivalent %, bezogen auf die Menge an eingesetzten Epoxidäquivalenten, von Bisphenol A.

9. Verfahren gemäss Anspruch 1, dadurch gekennzeichnet, dass diese erhältlich sind durch Vorverlängerung bei etwa 180°C von flüssigem Diglycidylether auf Basis von Bisphenol A mit 4 bis 26 Aequivalent %, bezogen auf die Menge an eingesetzten Epoxidäquivalenten, an 1,4-Butandiol oder an Diethylenglykol, in Gegenwart von etwa 1'200 bis 1'500 ppm, bezogen auf die Menge des flüssigen Diglycidylethers, an N-Ethyl-N-methylpiperidiniumiodid gefolgt von der Umsetzung mit 62 bis 84 Aeqivalent %, bezogen auf die Menge an eingesetzten Epoxidäquivalenten, von Bisphenol A.

10. Verfahren zur Herstellung gehärteter Produkte unter Verwendung der vorverlängerten Epoxidharze gemäss dem Verfahren aus Anspruch 1.

## Claims (Claims for the following Contracting State(s): BE, CH, DE, FR, GB, IT, LI, NL)

1. An epoxy resin which is obtainable by an advancement reaction comprising the steps:
a) reacting a liquid or semi-solid aromatic epoxy resin containing on average more than one epoxy group per molecule with about 2 to 30 equivalent %, based on the amount of epoxide equivalents of the epoxy resin used for the advancement, of an aliphatic diol having two primary hydroxyl groups in the presence of a catalytic amount of a cyclic quaternary ammonium compound, and
b) reacting the product obtained in step a) with about 30 to 95 equivalent %, based on the amount of epoxide equivalents of the epoxy resin used for the advancement, of a phenol or bisphenol of formula I 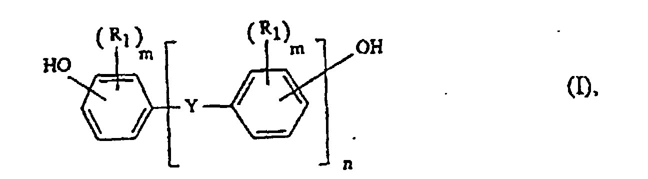 wherein m is 0, 1 or 2, n is 0 or in particular 1, R₁ is C₁-C₈alkyl, chloro or in particular bromo, and Y is a direct C-C bond or is a radical selected from the group consisting of -CH₂-, -CHCH₃-, -C(CH₃)₂-, -O-, -S- and -SO₂-.

2. An advanced epoxy resin according to claim 1, wherein the liquid or semi-solid aromatic epoxy resin containing on average more than one epoxy group per molecule is a diglycidyl ether based on bisphenol A which has an epoxy number of about three to six equivalents/kg.

3. An advanced epoxy resin according to claim 1, wherein the phenol or bisphenol of formula I is selected from the group consisting of resorcinol, hydroquinone, 4,4'-dihydroxybiphenyl, bis(4-hydroxyphenyl)methane, bis(4-hydroxyphenyl) ether, bis(4-hydroxyphenyl) sulfide, bis(4-hydroxyphenyl) sulfone and, in particular, 2,2-bis(4-hydroxyphenyl)propane or a chlorinated or brominated derivative thereof, especially tetrabromobisphenol A.

4. An advanced epoxy resin according to claim 1, wherein the cyclic quaternary ammonium compound used for catalysing the advancement reaction is a quaternary pyrrolidinium salt, a quaternary morpholinium salt or, in particular, a quaternary piperidinium salt.

5. An advanced epoxy resin according to claim 4, wherein the cyclic quaternary ammonium compound used for catalysing the advancement reaction is a compound of formula II, III or IV 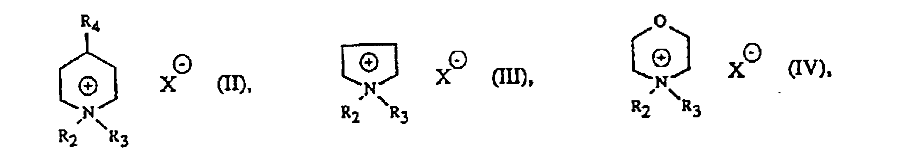 wherein R₂ is C₁-C₈alkyl and R₃ is C₁-C₈alkyl, C₂-C₈hydroxyalkyl, C₃-C₈alkoxyhydroxyalkyl, C₃-C₈alkenyl, C₃-C₈alkoxycarbonylalkyl, C₃-C₈alkylcarbonylalkyl, C₇-C₉phenylalkyl or C₇-C₉phenylhydroxyalkyl, R₄ is hydrogen or hydroxyl, and X is halogen or acetate.

6. An advanced epoxy resin according to claim 1, which is obtainable by advancing, at a temperature from 160 to 200°C and under a pressure of 10 to 600 mbar, a liquid diglycidyl ether based on bisphenol A with 2 to 30 equivalent %, based on the amount of epoxide equivalents employed, of an α,ω-alkylene glycol, having two to six carbon atoms, or of a polyethylene glycol, especially diethylene glycol, in the presence of 600 to 2400 ppm, based on the amount of liquid diglycidyl ether, of a quaternary pyrrolidinium, morpholinium or, in particular, piperidinium salt, and subsequently reacting the advanced product with 30 to 95 equivalent %, based on the amount of epoxide equivalents employed, of bisphenol A, bisphenol F, tetrabromobisphenol A, or of a mixture of these phenols.

7. An advanced epoxy resin according to claim 1, which is obtainable by advancing, at about 180°C, liquid diglycidyl ether based on bisphenol A with 3 to 19 equivalent %, based on the amount of epoxide equivalents employed, of 1,4-butanediol or of diethylene glycol, in the presence of about 600 to 1200 ppm, based on the amount of liquid diglycidyl ether, of N-ethyl-N-methylpiperidinium iodide, and subsequently reacting the advanced product with 45 to 61 equivalent %, based on the amount of epoxide equivalents employed, of bisphenol A.

8. An advanced epoxy resin according to claim 1, which is obtainable by advancing, at about 180°C, liquid diglycidyl ether based on bisphenol A with 4 to 25 equivalent %, based on the amount of epoxide equivalents employed, of 1,4-butanediol or of diethylene glycol, in the presence of about 1200 to 2400 ppm, based on the amount of liquid diglycidyl ether, of N-ethyl-N-methylpiperidinium iodide, and subsequently reacting the advanced product with 57 to 78 equivalent %, based on the amount of epoxide equivalents employed, of bisphenol A.

9. An advanced epoxy resin according to claim 1, which is obtainable by advancing at about 180°C, liquid diglycidyl ether based on bisphenol A with 4 to 26 equivalent %, based on the amount of epoxide equivalents employed, of 1,4-butanediol or of diethylene glycol, in the presence of about 1200 to 1500 ppm, based on the amount of liquid diglycidyl ether, of N-ethyl-N-methylpiperidinium iodide, and subsequently reacting the advanced product with 62 to 84 equivalent %, based on the amount of epoxide equivalents employed, of bisphenol A.

10. A process for the preparation of cured products using the advanced epoxy resin according to claim 1.

## Claims (Claims for the following Contracting State(s): ES)

1. A process for preparing epoxy resins by an advancement reaction comprising the steps:
a) reacting a liquid or semi-solid aromatic epoxy resin containing on average more than one epoxy group per molecule with about 2 to 30 equivalent %, based on the amount of epoxide equivalents of the epoxy resin used for the advancement, of an aliphatic diol having two primary hydroxyl groups in the presence of a catalytic amount of a cyclic quaternary ammonium compound, and
b) reacting the product obtained in step a) with about 30 to 95 equivalent %, based on the amount of epoxide equivalents of the epoxy resin used for the advancement, of a phenol or bisphenol of formula I 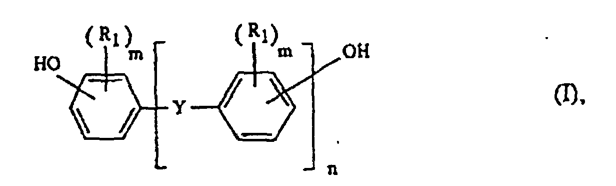 wherein m is 0, 1 or 2, n is 0 or in particular 1, R₁ is C₁-C₈alkyl, chloro or in particular bromo, and Y is a direct C-C bond or is a radical selected from the group consisting of -CH₂-, -CHCH₃-, -C(CH₃)₂-, -O-, -S- and -SO₂-.

2. A process according to claim 1, wherein the liquid or semi-solid aromatic epoxy resin containing on average more than one epoxy group per molecule is a diglycidyl ether based on bisphenol A which has an epoxy number of about three to six equivalents/kg.

3. A process according to claim 1, wherein the phenol or bisphenol of formula I is selected from the group consisting of resorcinol, hydroquinone, 4,4' -dihydroxybiphenyl, bis(6-hydroxyphenyl)methane, bis(4-hydroxyphenyl) ether, bis(4-hydroxyphenyl) sulfide, bis(4-hydroxyphenyl) sulfone and, in particular, 2,2-bis(6-hydroxyphenyl)propane or a chlorinated or brominated derivative thereof, especially tetrabromobisphenol A.

4. A process according to claim 1, wherein the cyclic quaternary ammonium compound used for catalysing the advancement reaction is a quaternary pyrrolidinium salt, a quaternary morpholinium salt or, in particular, a quaternary piperidinium salt.

5. A process according to claim 4, wherein the cyclic quaternary ammonium compound used for catalysing the advancement reaction is a compound of formula II, III or IV 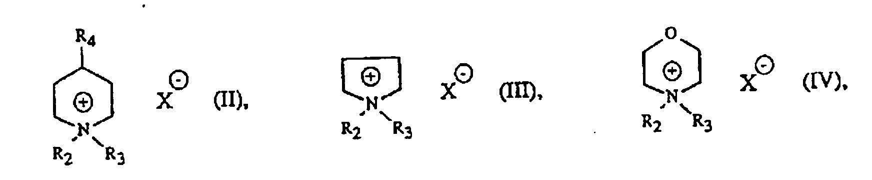 wherein R₂ is C₁-C₈alkyl and R₃ is C₁-C₈alkyl, C₂-C₈hydroxyalkyl, C₃-C₈alkoxyhydroxyarkyy, C₃-C₈alkenyl, C₃-C₈alkoxycarbonylalkyl, C₃-C₈alkycarbonylalkyl, C₇-C₉phenylalkyl or C₇-C₉phenylhydroxyalkyl, R₄ is hydrogen or hydroxyl, and X is halogen or acetate.

6. A process according to claim 1, wherein the resin is obtainable by advancing, at a temperature from 160 to 200°C and under a pressure of 10 to 600 mbar, a liquid diglycidyl ether based on bisphenol A with 2 to 30 equivalent %, based on the amount of epoxide equivalents employed, of an α,ω-alkylene glycol, having two to six carbon atoms, or of a polyethylene glycol, especially diethylene glycol, in the presence of 600 to 2400 ppm, based on the amount of liquid diglycidyl ether, of a quaternary pyrrolidinium, morpholinium or, in particular, piperidinium salt, and subsequently reacting the advanced product with 30 to 95 equivalent %, based on the amount of epoxide equivalents employed, of bisphenol A, bisphenol F, tetrabromobisphenol A, or of a mixture of these phenols.

7. A process according to claim 1, wherein the resin is obtainable by advancing, at about 180°C, liquid diglycidyl ether based on bisphenol A with 3 to 19 equivalent %, based on the amount of epoxide equivalents employed, of 1,4-butanediol or of diethylene glycol, in the presence of about 600 to 1200 ppm, based on the amount of liquid diglycidyl ether, of N-ethyl-N-methylpiperidinium iodide, and subsequently reacting the advanced product with 45 to 61 equivalent %, based on the amount of epoxide equivalents employed, of bisphenol A.

8. A process according to claim 1, wherein the resin is obtainable by advancing, at about 180°C, liquid diglycidyl ether based on bisphenol A with 4 to 25 equivalent %, based on the amount of epoxide equivalents employed, of 1,4-butanediol or of diethylene glycol, in the presence of about 1200 to 2400 ppm, based on the amount of liquid diglycidyl ether, of N-ethyl-N-methylpiperidinium iodide, and subsequently reacting the advanced product with 57 to 78 equivalent %, based on the amount of epoxide equivalents employed, of bisphenol A.

9. A process according to claim 1, wherein the resin is obtainable by advancing, at about 180°C, liquid diglycidyl ether based on bisphenol A with 4 to 26 equivalent %, based on the amount of epoxide equivalents employed, of 1,4-butanediol or of diethylene glycol, in the presence of about 1200 to 1500 ppm, based on the amount of liquid diglycidyl ether, of N-ethyl-N-methylpiperidinium iodide, and subsequently reacting the advanced product with 62 to 84 equivalent %, based on the amount of epoxide equivalents employed, of bisphenol A.

10. A process for the preparation of cured products using advanced epoxy resins according to the process of claim 1.

## Revendications (Revendications pour l'(les) Etat(s) contractant(s) suivant(s): BE, CH, DE, FR, GB, IT, LI, NL)

1. Résines époxydes que l'on peut obtenir par réaction de pré-allongement comprenant les étapes suivantes :
a) la réaction d'une résine époxyde liquide ou semi-solide aromatique contenant en moyenne plus d'un groupe époxyde par molécule avec environ 2 à 30 équivalents en %, par rapport à la quantité d'équivalents de la résine époxyde utilisée pour la réaction de pré-allongement, d'un diol aliphatique avec deux groupes hydroxyles primaires, en présence d'une quantité catalytique d'un composé d'ammonium quaternaire cyclique, et
b) la réaction du produit obtenu à l'étape a) avec d'environ 30 à 95 % d'équivalents par rapport à la quantité d'équivalents d'époxyde de la résine époxyde utilisée pour la réaction de pré-allongement d'un phénol ou d'un bisphénol de formule I : 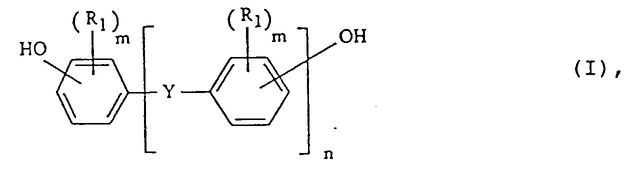 dans laquelle l'index m vaut 0, 1 ou 2, l'index n vaut 0 ou plus particulièrement 1, R₁ représente alkyle en C₁-C₈, le chlore ou plus particulièrement le brome et Y est une liaison directe ou un radical pris dans le groupe comprenant -CH₂-, -CHCH₃-, -C(CH₃)₂-, -O-, -S- et -SO₂-.

2. Résines époxydes pré-allongées selon la revendication 1, caractérisées en ce que la résine époxyde liquide ou semi-solide aromatique contenant en moyenne plus d'un seul groupe époxyde par molécule est un éther diglycidylique à base de bisphénol A qui présente un indice d'époxyde d'environ 3 à 6 équivalents/kg.

3. Résines époxydes pré-allongées selon la revendication 1, caractérisées en ce que le phénol ou le bisphénol de formule I sont pris dans le groupe comportant résorcine, hydroquinone, 4,4'-dihydroxybiphényle, bis-(4-hydroxyphényl)-méthane, bis-(4-hydroxyphényl)-éther, sulfure de bis-(4-hydroxyphényle), bis-(4-hydroxyphényl)-sulfone et en particulier 2,2-bis-(4-hydroxyphényl)-propane ou leurs dérivés chlorés ou bromés, comme par exemple tétrabromobisphénol A.

4. Résines époxydes pré-allongées selon la revendication 1, caractérisées en ce que l'on utilise en tant que composé d'ammonium quaternaire cyclique pour la catalyse de la réaction de pré-allongement des sels de pyrrolidinium quaternaires, des sels de morpholinium quaternaires ou notamment des sels de pipéridinium quaternaires.

5. Résines époxydes pré-allongées selon la revendication 4, caractérisées en ce que l'on utilise en 5 tant que composé d'ammonium quaternaire cyclique pour la catalyse de la réaction de pré-allongement des composés de formules II, III ou IV : 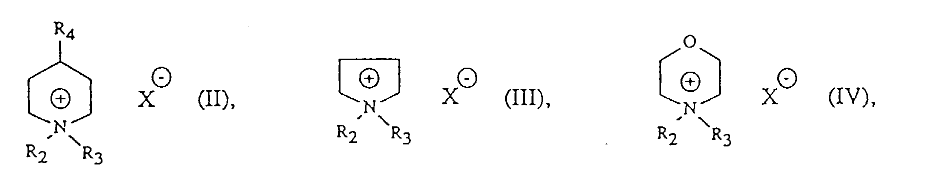 dans lesquelles R₂ représente alkyle en C₁-C₈ et R₃ 5 représente en alkyle en C₁-C₈, hydroxyalkyle en C₂-C₈, alcoxyhydroxyalkyle en C₃-C₈, alcényle en C₃-C₈, alcoxycarbonylalkyle en C₃-C₈, alkylcarbonylalkyle en C₃-C₈, phénylalkyle en C₇-C₉ ou phénylhydroxyalkyle en C₇-C₉, R₄ représente l'hydrogène ou hydroxyle et X représente halogène ou acétate.

6. Résines époxydes pré-allongées selon la revendication 1, caractérisées en ce que l'on peut les obtenir par pré-allongement, à une température de 160 à 200 °C et sous une pression de 10 à 600 mbars, d'éthers diglycidyliques liquides à base de bisphénol A avec 2 à 30 équivalents en %, par rapport à la quantité d'équivalents d'époxyde utilisée, de α,ω-alkylèneglycols avec 2 à 6 atomes de carbone ou de polyéthylèneglycol, plus particulièrement de diéthylèneglycol, en présence de 600 à 2 400 ppm, par rapport à la quantité d'éther diglycidylique liquide, d'un sel de pyrrolidinium, de morpholinium ou plus particulièrement de pipéridinium, suivie de la réaction avec 30 à 95 équivalents en % par rapport à la quantité d'équivalents époxyde utilisée de bisphénol A, de bisphénol F, de tétrabromobisphénol A ou d'un mélange de ces phénols.

7. Résines époxydes pré-allongées selon la revendication 1, caractérisées en ce que l'on peut les obtenir par pré-allongement, à une température de 180 °C, d'éthers diglycidyliques liquides à base de bisphénol A avec 3 à 19 équivalents en %, par rapport à la quantité d'équivalents d'époxyde utilisée, de 1,4-butanediol ou de diéthylèneglycol, en présence d'environ 600 à 1 200 ppm, par rapport à la quantité d'éther diglycidylique liquide, d'iodure de N-éthyl-N-méthylpipéridinium, suivie de la réaction avec 45 à 61 équivalents en % par rapport à la quantité d'équivalents d'époxyde utilisée de bisphénol A.

8. Résines époxydes pré-allongées selon la revendication 1, caractérisées en ce que l'on peut les obtenir par pré-allongement, à environ 180 °C, d'éthers diglycidyliques liquides à base de bisphénol A avec 4 à 25 équivalents en %, par rapport à la quantité d'équivalents d'époxyde utilisée, de 1,4-butanediol ou de diéthylèneglycol, en présence d'environ 1 200 à 2 400 ppm, par rapport à la quantité d'éther diglycidylique liquide, d'iodure de N-éthyl-N-méthylpipéridinium, suivie de la réaction avec 57 à 78 équivalents en %, par rapport à la quantité d'équivalents d'époxyde utilisée, de bisphénol A.

9. Résines époxydes pré-allongées selon la revendication 1, caractérisées en ce que l'on peut les obtenir par pré-allongement, à environ 180 °C, d'éthers diglycidyliques liquides à base de bisphénol A avec 4 à 26 équivalents en %, par rapport à la quantité d'équivalents d'époxyde utilisée, de 1,4-butanediol ou de diéthylèneglycol, en présence d'environ 1 200 à 1 500 ppm, par rapport à la quantité d'éther diglycidylique liquide, d'iodure de N-éthyl-N-méthylpipéridinium, suivie de la réaction avec 62 à 84 équivalents en %, par rapport à la quantité d'équivalents d'époxyde utilisée, de bisphénol A.

10. Procédé pour la préparation de produits durcis en utilisant les résines époxydes pré-allongées selon la revendication 1.

## Revendications (Revendications pour l'(les) Etat(s) contractant(s) suivant(s): ES)

1. Procédé pour la préparation de résines époxydes par une réaction de pré-allongement comprenant les étapes suivantes :
a) la réaction d'une résine époxyde liquide ou semi-solide aromatique contenant en moyenne plus d'un groupe époxyde par molécule avec environ 2 à 30 équivalents en %, par rapport à la quantité d'équivalents de la résine époxyde utilisée pour la réaction de pré-allongement, d'un diol aliphatique avec deux groupes hydroxyles primaires, en présence d'une quantité catalytique d'un composé d'ammonium quaternaire cyclique, et
b) la réaction du produit obtenu à l'étape a) avec d'environ 30 à 95 % d'équivalents par rapport à la quantité d'équivalents d'époxyde de la résine époxyde utilisée pour la réaction de pré-allongement d'un phénol ou d'un bisphénol de formule I : 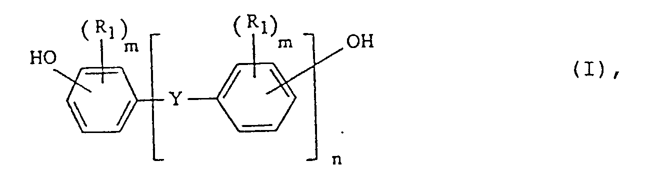 dans laquelle l'index m vaut 0, 1 ou 2, l'index n vaut 0 ou plus particulièrement 1, R₁ représente alkyle en C₁-C₈, le chlore ou plus particulièrement le brome et Y est une liaison directe ou un radical pris dans le groupe comprenant -CH₂-, -CHCH₃-, -C(CH₃)₂-, -O-, -S- et -SO₂-.

2. Procédé selon la revendication 1, caractérisé en ce que la résine époxyde liquide ou semi-solide aromatique contenant en moyenne plus d'un seul groupe époxyde par molécule est un éther diglycidylique à base de bisphénol A qui présente un indice d'époxyde d'environ trois à six équivalents/kg.

3. Procédé selon la revendication 1, caractérisé en ce que le phénol ou le bisphénol de formule I sont pris dans le groupe comportant résorcine, hydroquinone, 4,4'-dihydroxybiphényle, bis-(4-hydroxyphényl)-méthane, bis-(4-hydroxyphényl) -éther, sulfure de bis-(4-hydroxyphényle), bis-(4-hydroxyphényl)-sulfone et en particulier 2,2-bis-(4-hydroxyphényl)-propane ou leurs dérivés chlorés ou bromés, comme par exemple tétrabromobisphénol A.

4. Procédé selon la revendication 1, caractérisé en ce que l'on utilise en tant que composés d'ammonium quaternaire cyclique pour la catalyse de la réaction de pré-allongement des sels de pyrrolidinium quaternaires, des sels de morpholinium quaternaires ou notamment des sels de pipéridinium quaternaires.

5. Procédé selon la revendication 4, caractérisé en ce que l'on utilise en tant que composés d'ammonium quaternaire cyclique pour la catalyse de la réaction de pré-allongement des composés de formules II, III ou IV : 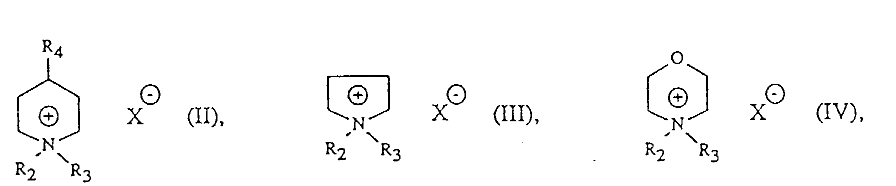 dans lesquelles R₂ représente alkyle en C₁-C₈ et R₃ représente en alkyle en C₁-C₈, hydroxyalkyle en C₂-C₈, alcoxyhydroxyalkyle en C₃-C₈, alcényle en C₃-C₈, alcoxycarbonylalkyle en C₃-C₈, alkylcarbonylalkyle en C₃-C₈, phénylalkyle en C₇-C₉ ou phénylhydroxyalkyle en C₇-C₉, R₄ représente l'hydrogène ou hydroxyle et X représente halogène ou acétate.

6. Procédé selon la revendication 1, caractérisé en ce que l'on peut les obtenir par pré-allongement, à une température de 160 à 200 °C et sous une pression de 10 à 600 mbars, d'éthers diglycidyliques liquides à base de bisphénol A avec 2 à 30 équivalents en %, par rapport à la quantité d'équivalents époxyde utilisée, de α,ω-alkylèneglycols avec 2 à 6 atomes de carbone ou de polyéthylèneglycol, plus particulièrement de diéthylèneglycol, en présence de 600 à 2 400 ppm, par rapport à la quantité d'éther diglycidylique liquide, d'un sel de pyrrolidinium, de morpholinium ou plus particulièrement de pipéridinium, suivie de la réaction avec 30 à 95 équivalents en % par rapport à la quantité d'équivalents d'époxyde utilisée de bisphénol A, de bisphénol F, de tétrabromobisphénol A ou d'un mélange de ces phénols.

7. Procédé selon la revendication 1, caractérisé en ce que l'on peut les obtenir par pré-allongement, à une température de 180 °C, d'éthers diglycidyliques liquides à base de bisphénol A avec 3 à 19 équivalents en %, par rapport à la quantité d'équivalents d'époxyde utilisée, de 1,4-butanediol ou de diéthylèneglycol, en présence d'environ 600 à 1 200 ppm, par rapport à la quantité d'éther diglycidylique liquide, d'iodure de N-éthyl-N-méthylpipéridinim, suivie de la réaction avec 45 à 61 équivalents en % par rapport à la quantité d'équivalents d'époxyde utilisée, de bisphénol A.

8. Procédé selon la revendication 1, caractérisé en ce que l'on peut les obtenir par pré-allongement, à environ 180 °C, d'éthers diglycidyliques liquides à base de bisphénol A avec 4 à 25 équivalents en %, par rapport à la quantité d'équivalents époxyde utilisée, de 1,4-butanediol ou de diéthylèneglycol, en présence d'environ 1 200 à 2 400 ppm, par rapport à la quantité d'éther diglycidylique liquide, d'iodure de N-éthyl-N-méthylpipéridinium, suivie de la réaction avec 57 à 78 équivalents en % par rapport à la quantité d'équivalents époxyde utilisée, de bisphénol A.

9. Procédé selon la revendication 1, caractérisé en ce que l'on peut les obtenir par pré-allongement, à environ 180 °C, d'éthers diglycidyliques liquides à base de bisphénol A avec 4 à 26 équivalents en %, par rapport à la quantité d'équivalents époxyde utilisée, de 1,4-butanediol ou de diéthylèneglycol, en présence d'environ 1 200 à 1 500 ppm, par rapport à la quantité d'éther diglycidylique liquide, d'iodure de N-éthyl-N-méthylpipéridinium, suivie de la réaction avec 62 à 84 équivalents en %, par rapport à la quantité d'équivalents d'époxyde utilisée, de bisphénol A.

10. Procédé pour la préparation de produits durcis en utilisant les résines époxydes pré-allongées selon la revendication 1.
